# EUROPÄISCHE PATENTANMELDUNG

(11) **EP 1 747 724 A2**
(43) Veröffentlichungstag der Anmeldung: **31.01.2007**
(21) Anmeldenummer: 06117996.6
(22) Anmeldetag: 27.07.2006
(51) Int. Cl.: A21C 9/08

(54) **Verfahren und Vorrichtung zum schlusslagengenauen Ausrichten von gewickelten Teigprodukten**

(30) Priorität: 27.07.2005 EP 05106923
(71) Anmelder: Fritsch GmbH, 97348 Markt Einersheim (DE)
(72) Erfinder: Udo Bernhardt, DE-97346 Iphofen (DE)
(74) Vertreter: Götz, Georg Alois

(57) **Zusammenfassung**

Verfahren zum schlusslagengenauen Ausrichten von gewickelten Teigprodukten (1), wobei das Teigprodukt (1) zwischen einer Transporteinrichtung (10) und einer Stelleinrichtung (13) entlang einer Transportstrecke geführt wird, und wobei eine Abweichung der Schlusslage von einer SOLL-Schlusslage gemessen wird, wobei eine mit Teigschubmitteln versehene Stelleinrichtung (13) verwendet wird, und die Stelleinrichtung (13) mit ihren Teigschubmitteln und/oder die Transporteinrichtung (10) abhängig von der SOLL-Schlusslagenmessung derart angesteuert werden, dass das Teigprodukt (1) mit zueinander unterschiedlichen Vorschubgeschwindigkeiten der Transport- und Stelleinrichtungen (10,13) um seine Längsachse gedreht und in die SOLL-Schlusslage überführt wird.

## Beschreibung

Die Erfindung betrifft ein Verfahren zum schlusslagengenauen Ausrichten von gewickelten Teigprodukten gemäß Oberbegriff des Anspruchs 1. Dabei wird eine Abweichung der Schlusslage von einer SOLL-Schlusslage gemessen. Weiter betrifft die Erfindung eine entsprechende Vorrichtung gemäß Oberbegriff des Anspruchs 12.

Bei der industriellen Herstellung von gewickelten Teigprodukten, z.B. Croissants, ist es gewünscht, dass beim Backen der gewickelten Teigwaren das außenliegende Ende des gewickelten Teigbands, der sogenannte Schluss, in einer definierten Position liegt. Beispielsweise sollte beim Croissant der Schluss beim Backvorgang an der Unterseite angeordnet sein. Ist die Schlusslage unkontrolliert, kommt es zu keinem reproduzierbaren Backergebnis.

Neben der Möglichkeit, die gewickelten Teigprodukte manuell um ihre Längsachse schlusslagengenau auszurichten und somit ein reproduzierbares Backergebnis zu fördern sind die folgenden Ansätze für ein schlusslagengenaues Ausrichten von gewickelten Teigprodukten um ihre Längsachse bekannt:

Die Druckschrift DE 197 47 472 A1 offenbart eine Vorrichtung zur schlussgerechten Ablage von Teigstücken und ein entsprechendes Verfahren. Dabei ist vorgesehen, das auszurichtende Teigstück in die Senke zwischen zwei waagrechten, zueinander parallelen Rollen aufzulegen und durch gleichsinnige Drehung der Rollen zu rotieren. Während der Rotation des Teigstücks wird mittels eines Sensorsystems, welches als Reflexions-Lichttaster oder als PC-gesteuerte Kamera ausgebildet ist, die Lage des Schlusses des Teigstücks erfasst. Befindet sich der Schluss in einer definierten Lage wird eine der beiden Rollen mittels eines Hubsystems angehoben und das Teigstück über die andere Rolle abgerollt und auf einen Endablagentisch abgeworfen.

Die Druckschrift EP 1 342 415 A2 beschreibt eine Vorrichtung zum Falten von Croissants, wobei eine Orientierungsstation zum schlusslagengenauen Ausrichten der Croissants vorgesehen ist. Bei dieser Vorrichtung ist das Croissant auf einer Transportbahn, bestehend aus zwei parallelen Riemen, angeordnet und wird mittels der Transportbahn in die Orientierungsstation eingefahren. In der Orientierungsstation sind mindestens ein Paar waagrecht und zueinander parallel angeordnete Rollen vorgesehen, die paarweise angehoben und versenkt werden können. Bei Einlauf des Croissants befinden sich die Rollen zunächst in der versenkten Position. Sobald ein Croissant mittels der Transportbahn in eine Richtposition verfahren ist, werden die Rollen angehoben, nehmen das Croissant auf und heben dieses von der Transportbahn ab. Danach werden die Croissants durch eine gleichsinnige Bewegung der Rollen rotiert und ein Sensorsystem detektiert die Schlusslage. Befindet sich der Schluss in einer definierten Position werden die Rollen versenkt und legen dabei das ausgerichtete Croissant auf der Transportbahn ab.

Die Druckschrift EP 0 647 405 B1 offenbart ein Verfahren zum Einstellen der Position eines aufgerollten Endes eines Croissant-Teigstücks in einem Croissant-Teigstück-Biegeapparat. Bei diesem Verfahren wird das aufgerollte Croissant-Teigstück auf einem Förderband transportiert und läuft gegen eine Eingriffsvorrichtung, die derart ausgebildet ist, dass das Croissant-Teigstück auf dem Förderband stationär beziehungsweise ortsfest rotiert. Während der Rotation wird das aufgerollte Ende des Teigstücks durch einen Sensor detektiert. Auf Basis der Signale des Sensors wird die Eingriffsvorrichtung von dem Teigstück gelöst und das Teigstück wird wieder freigegeben. Nach einer kurzen Verfahrstrecke des ausgerichteten Croissants auf dem Förderband ist ein ergänzendes Riemensystem vorgesehen, welches eine Transportbahn bildet, die gegenüberliegend und parallel zu dem Förderband angeordnet ist. Das Croissant ist im weiteren Verlauf zwischen Förderband und Riemensystem angeordnet und wird von diesen gemeinsam weitertransportiert, wobei gleichzeitig eine weitere Rotation des Croissants unterbunden wird.

Der Erfindung liegt die Aufgabe zugrunde, bei einem Verfahren sowie einer Vorrichtung zum schlusslagengenauen Ausrichten von gewickelten Teigprodukten die Genauigkeit und Reproduzierbarkeit zu verbessern. Zur Lösung werden das im Patentanspruch 1 angegebene Verfahren sowie die im Patentanspruch 12 vorgegebene Vorrichtung vorgeschlagen. Optionale Erfindungsausgestaltungen ergeben sich aus den abhängigen Ansprüchen und der nachfolgenden Beschreibung.

Bei dem erfindungsgemäßen Verfahren zum schlusslagengenauen Ausrichten von gewickelten Teigprodukten wird das Teigprodukt derart ausgerichtet, dass der Schluss des Teigprodukts, also die Position des außenliegenden Endabschnitts, beispielsweise in Form einer abgestumpften Spitze des Teigbandes oder Teigdreiecks, aus dem das Teigprodukt gewickelt ist, reproduzierbar an einer definierten Position angeordnet ist. Bevorzugt wird der Schluss des Teigprodukts vor Einlauf in eine Biegevorrichtung an der Oberseite angeordnet. Erfindungsgemäß übt die Stelleinrichtung mit aktiven, gezielt und/oder dosiert ansteuerbaren Schubmitteln auf das Teigprodukt je nach Differenz zwischen Soll- und Istlage des Endabschnitts Antriebskräfte in oder entgegen der Förderrichtung auf das Teigstück beziehungsweise -produkt aus, wobei sich bei deren Abweichung von der regulären Fördergeschwindigkeit der Transporteinrichtung die Drehung ergeben kann.

Bei dem erfindungsgemäßen Verfahren ist vorgesehen, dass eine Abweichung der Schlusslage von einer SOLL-Schlusslage messtechnisch erfasst wird. Vorzugsweise wird dazu eine IST-Lage messtechnisch ermittelt und die Abweichung als eine Differenz zwischen der IST- und der SOLL-Schlusslage entsprechend einem Regelkreis bestimmt. Alternativ kann die Abweichung von einer SOLL-Schlusslage bestimmt werden, indem messtechnisch ausschließlich erfasst wird, ob die SOLL-Schlusslage vorliegt oder nicht. Diese Bestimmung der Abweichung ist beispielsweise vorteilhaft, wenn das Teigprodukt rotiert wird und die Rotation bei Vorliegen der SOLL-Schlusslage gestoppt wird.

Für den Ausrichtvorgang sind zur Bildung der Transportstrecke optional zwei Transportbahnen vorgesehen, die gegenüberliegend und parallel oder im wesentlichen parallel zueinander angeordnet sind und insbesondere einen Transportzwischenraum bilden, in dem das Teigprodukt entlang der Transportstrecke von beiden Transportbahnen gemeinsam geführt wird. Während des Transports ist das Teigprodukt also mit beiden Transportbahnen in vorzugsweise ständigem Kontakt.

Die Ausrichtung des Teigprodukts - also die Drehung des Teigprodukts um seine Längsachse in die SOLL-Schlusslage - erfolgt nach einer Erfindungsweiterbildung, indem die zwei Transportbahnen mit zueinander unterschiedlichen Vorschubgeschwindigkeiten angesteuert werden, das heißt die erste und die zweite Transportbahn werden gleichzeitig mit zwei unterschiedlichen Vorschubgeschwindigkeiten angesteuert.

Diese Erfindungsweiterbildung geht dabei von der Überlegung aus, Transportbahnen mit Doppelnutzen zu verwenden, nämlich zum einen für den Transport des Teigprodukts und zum anderen zur Ausrichtung des Teigprodukts. Ein zusätzlicher apparativer Aufwand für eine Station zum Ausrichten der Teigprodukte, wie er aus dem Stand der Technik bekannt ist, wird nicht benötigt. Die Vereinfachung des apparativen Aufwands führt auch zu einer Vereinfachung des Verfahrens. Ferner erfolgt das Verfahren zur schlusslagengenauen Ausrichtung kontinuierlich oder quasikontinuierlich.

Bei einer vorteilhaften Ausbildung der Erfindung ist vorgesehen, dass die Messung erfolgt, während das Teigprodukt in der Transportstrecke angeordnet ist und somit nachdem das Teigprodukt in den Transportzwischenraum zwischen den Transportbahnen eingefahren ist.

Bei einer weiteren Ausbildung der Erfindung wird die Messung durchgeführt, während das Teigprodukt stationär beziehungsweise in Förderrichtung ortsfest gehalten um seine Achse rotiert. Dies wird erreicht, indem die erste und die zweite Transportbahn mit betragsmäßig gleichen, aber gegenläufigen Vorschubgeschwindigkeiten angesteuert werden. Vorteilhaft bei dieser Ausbildung ist, dass der Messort zur Messung der Abweichung stationär ist und die Messung somit apparativ und von der Messauswertung her vereinfacht wird.

Alternativ oder ergänzend z.B. in einem zweiten Messschritt kann vorgesehen sein, dass die Messung erfolgt, während das Teigprodukt entlang der Transportstrecke verfahren wird und gleichzeitig um seine Längsachse rotiert. Diese Messsituation kann erreicht werden, indem beide Transportbahnen mit gleichläufigen Vorschubgeschwindigkeiten angesteuert werden, die jedoch betragsmäßig unterschiedlich sind. Bei dieser Ausführung des Verfahrens erfolgt die Messung der Abweichung vorzugsweise mit einer Sensorvorrichtung, die gleichlaufend mit dem Teigprodukt entlang der Transportstrecke mitbewegt wird oder mit einer oder mehreren stationären Sensorvorrichtungen. Diese Ausbildung der Erfindung beinhaltet den Vorteil, dass die Ausrichtung bei einem kontinuierlich durchlaufenden Teigprodukt durchgeführt wird, der Vorschub des Teigprodukts muss nicht - wie bei dem bekannten Stand der Technik - unterbrochen werden.

Es liegt eine bevorzugte Ausführung des Verfahrens vor, wenn die Transportbahnen zunächst mit gleicher Vorschubgeschwindigkeit angesteuert werden, bis das Teigprodukt zwischen den Transportbahnen erkannt wird, dann die Transportbahnen mit unterschiedlicher Vorschubgeschwindigkeit angesteuert werden bis sich das Teigprodukt in der SOLL-Schlusslage befindet und dann die beiden Transportbahnen wieder auf Gleichlauf geschaltet werden, d.h. mit gleicher Vorschubgeschwindigkeit angesteuert werden.

Bei einer vorteilhaften Weiterbildung ist vorgesehen, dass das Teigstück in seiner ausgerichteten Lage bis zum nächsten Beabreitungsschritt ohne Drehung oder sonst stabilisiert gehalten wird, vorzugsweise ununterbrochen stabilisiert gehalten wird. Diese Maßnahme dient dazu die Reproduzierbarkeit der Ausrichtung weiter zu erhöhen, da nachfolgende, unkontrollierte Drehungen des Teigprodukts vermieden werden.

Zur Messung der Abweichung der Schlusslage von einer SOLL-Schlusslage ist vorzugsweise vorgesehen, dass eine oder mehre digitale Bilder des Teigprodukts aufgenommen werden und diese Bilder mittels digitaler Bildverarbeitung ausgewertet werden. Eine Möglichkeit der Auswertung besteht darin, dass das oder die Bilder mit hinterlegten Referenzbildern verglichen werden. Alternativ oder ergänzend kann durch Auswertung eines durch den Schluss hervorgerufenen Schattens oder durch Extraktion der markanten Abschlusslinie des Schlusses dessen Position messtechnisch erfasst werden.

Alternativ oder ergänzend kann vorgesehen sein, dass für weitere markante Konturabschnitte des Teigprodukts, wie z.B. Länge, Symmetrie, Dicke des Teigprodukts etc., SOLL-Werte sowie Toleranzgrenzwerte hinterlegt sind, so dass die Teigprodukte als "In Ordnung" (i.O.) oder "nicht in Ordnung" (n.i.O.) einklassifiziert werden. Findet eine derartige Klassifizierung statt, werden vorzugsweise in einem weiteren Schritt über ein Auswurfmittel die als n.i.O. einklassifizierten Teigprodukte insbesondere vollautomatisch aus der Fertigung ausgesondert.

Es liegt im Rahmen von Weiterbildungen der Erfindung, nicht nur die Drehstellung des Teigstück-Schlusses, sondern auch dessen Relativlage bezüglich der (gegebenenfalls gebogenen) Längserstreckung des Teigstücks bzw. -produkts mittels Sensorik, beispielsweise zur Bildverarbeitung geeigneter Kameramittel, zu erfassen. Durch computergestützte Bildverarbeitung in Verbindung mit beispielsweise einer intelligenten CCD-Zeilenkamera (geeignetes Produkt: MZS4000 der Firma ELTROTEC beispielsweise) lässt sich elektronisch erkennen, ob der Schluss des Teigprodukts zu "schief" gewickelt ist, so dass eine Qualitätsuntergrenze unterschritten wird. Solchenfalls können von dem computergestützten Auswertungsmodul, an welchen die CCD-Zeilenkamera angeschlossen ist, Ausschleusmittel für das "schief" gewickelte Teigprodukt angesteuert werden.

Alternativ oder zusätzlich lässt sich mit den genannten, bildverarbeitenden Kameramitteln auch ein etwa zu großer Versatz, insbesondere Querversatz, des auf Fördermittel liegenden Teigstücks gegenüber einem mittleren Längsbereich der Fördermittel erkennen. Dies wird gegebenenfalls per algorithmischer Bildverarbeitung in einer Auswertungseinheit, die eingangsseitig mit den Kameramitteln verbunden ist, erkannt. Die Auswertungseinheit kann dann - in optionaler Weiterführung dieses Gedankens - Teig-Querverstellmittel oder Teigstück-Querschubmittel regelungstechnisch so ansteuern, dass das querverschobene Teigprodukt in eine mittlere Solllage auf einem Transportband oder dergleichen verschoben wird. Teigband-Zentriereinrichtungen, die als derartige Querverstell- bzw. Querschubeinrichtungen funktionieren können, sind an sich bekannt (vgl. z. B. EP-A-1 198 989).

Die erfindungsgemäße Vorrichtung zum schlusslagengenauen Ausrichten von gewickelten Teigprodukten gemäß Anspruch 12 umfasst eine mit aktiv Antriebskraft ausübenden Teigschubmitteln versehene Stelleinrichtung zum Verschieben und zum Transport des Teigprodukts entlang einer Transportstrecke, wobei die Schubmittel in Wirkungsverbindung mit der zugeordneten Transporteinrichtung arbeitend angeordnet. Beide sind derart voneinander beabstandet sind, dass dazwischen das Teigprodukt gemeinsam führbar ist, also mit Schubmitteln und der Transporteinrichtung in Kontakt steht. Es ist ferner eine Regel- oder sonstige Steuereinrichtung vorgesehen, die die Schubmittel und die Transporteinrichtung jeweils mit einer Vorschubgeschwindigkeit ansteuert. Ferner ist eine Sensorvorrichtung zur Messung der Abweichung der Schlusslage des Teigstücks von einer SOLL-Schlusslage angeordnet. Erfindungsgemäß ist die Steuereinrichtung schaltungstechnisch und/oder regelungstechnisch derart ausgebildet, dass für die Messung der Abweichung der Schlusslage und/oder für die Ausrichtung des Teigstücks in die SOLL-Schlusslage die Transporteinrichtung und die Schubmittel mit zueinander unterschiedlichen Vorschubgeschwindigkeiten ansteuerbar sind oder angesteuert werden.

Nach einer optionalen Erfindungsausbildung sind die Transporteinrichtung und die Teigschubmittel mit einer ersten und einer zweiten Transportbahn zum Transport des Teigprodukts entlang einer Transportbahn realisiert, wobei die Transportbahnen gegenüberliegend und parallel oder im wesentlichen parallel zueinander angeordnet und derart beabstandet sind, dass zwischen den Transportbahnen das Teigprodukt gemeinsam führbar ist. Die Steuereinrichtung dient zur Ansteuerung der Vorschubgeschwindigkeiten der Transportbahnen. Die Sensorvorrichtung ist zur Messung der Abweichung der Schlusslage von einer SOLL-Schlusslage angeordnet.

Bei bevorzugten Ausführungsformen ist die erste Transportbahn als Transportunterlage ausgebildet und/oder als Transportband, insbesondere mit durchgängiger Transportfläche realisiert und wird von einem Endlos-Bandförderer angetrieben. Diese Ausbildung erleichtert aufgrund des vollflächigen Kontakts des Teigprodukts mit dem ersten Transportband das Abrollen des Teigprodukts auf der ersten Transportbahn. Die zweite Transportbahn ist dagegen vorzugsweise als Riemensystem bestehend aus Einzelriemen oder -bändern realisiert, um eine Beobachtung des Teigprodukts mit der Sensorvorrichtung durch die zweite Transportbahn hindurch zu ermöglichen, und wird von einem Endlos-Riemenförder angetrieben. Zur Realisierung von verschiedenen Vorschubgeschwindigkeiten ist dem Endlos-Bandförderer und dem Endlos-Riemenförderer bevorzugt jeweils ein eigener Antriebsmotor zugeordnet.

Insbesondere zur Fixierung und/oder Stabilisierung des Teigprodukts in der schlusslagengenauen Ausrichtung kann ein weiteres Riemensystem oder Transportsystem nachgeschaltet sein, welches das ausgerichtete Teigprodukt ohne Zwischenunterbrechung der Fixierung und/oder der Stabilisierung übernimmt. Insbesondere kann vorgesehen sein, dass die Riemen des ersten Riemensystems und des weiteren Riemensystems über eine gemeinsam Übergangsachse geführt sind, auf der mehrere Riemenumlenkrollen axial hintereinander freilaufend gelagert sind und je einem Riemen des ersten oder des weiteren Riemensystems zugeordnet sind. Vorzugsweise sind die Riemenumlenkrollen in axialer Richtung abwechselnd von einem Riemen des ersten Riemensystems und von einem Riemen des weiteren Riemensystems umfasst.

Bei einer bevorzugten Weiterbildung der Vorrichtung können Mittel zum Auswurf von Ausschussprodukten vorgesehen sein, die vorzugsweise als verschiebbare Umlenkrolle des Transportbandes ausgebildet sind. Insbesondere kann zur Straffung des Transportbandes das Transportband elastisch ausgebildet sein oder es können Mittel zur Längenkompensation des Transportbandes vorgesehen sein.

Bevorzugt wird zur Detektion der Abweichung eine Sensorvorrichtung eingesetzt, die als Kamera ausgebildet ist. Diese Ausbildung ermöglicht neben der Detektion der Schlusslage auch die Überprüfung von weiteren Qualitätsmerkmalen, so dass Ausschuss durch die Sensorvorrichtung erkannt werden kann. Alternativ werden als Sensorvorrichtung berührende Sensoren, also z.B. Taster, oder berührungslose Sensoren, wie z.B. Laserentfernungsmesser, Ultraschallsensoren etc. eingesetzt.

Die Erfindung wurde in Zusammenhang mit der Ausrichtung der Lage des Schlusses erläutert. Es ist aber auch denkbar, statt des Schlusses einen anderen automatisch erkennbaren Bereich an einem Teigprodukt für die Ausrichtung zu wählen. So könnte beispielsweise auch ein Teigprodukt ausgerichtet werden, so dass eine Vertiefung eine definierte Position erhält.

Weitere Einzelheiten, Merkmale, Merkmalskombinationen, Vorteile und Wirkungen auf der Basis der Erfindung ergeben sich aus der nachfolgenden Beschreibung bevorzugter Ausführungsbeispiele der Erfindung und aus den Zeichnungen. Diese zeigen jeweils in schematischer Darstellung:
- Figur 1: ein Croissant in Draufsicht;
- Figur 2: ein Ausführungsbeispiel einer Vorrichtung zum schlusslagengenauen Ausrichten von gewickelten Teigprodukten in schematischer Seitenansicht;
- Figur 3: den Ausrichtbereich B des Ausführungsbeispiels in Figur 2 in Draufsicht;
- Figur 4: Weg-Geschwindigkeitsdiagramm zur Illustration von drei Ausführungsbeispielen des Verfahrens zum schlusslagengenauen Ausrichten von gewickelten Teigprodukten.

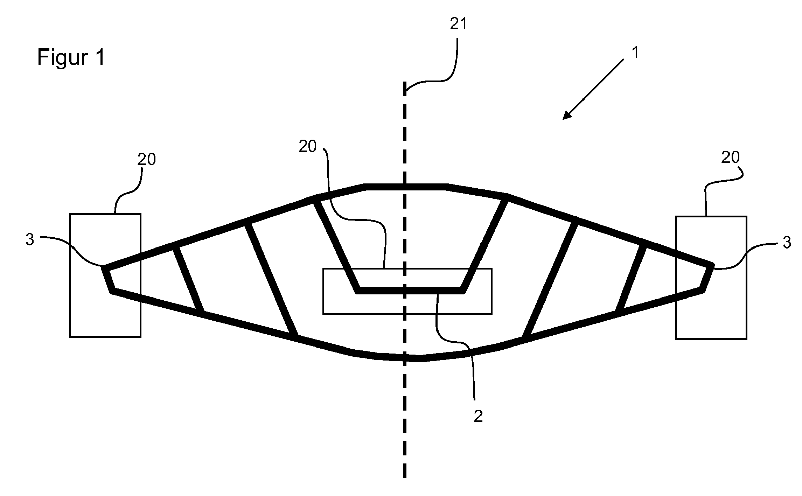

Einander entsprechende Teile und Größen sind in allen Figuren stets mit den selben Bezugszeichen versehen. Figur 1 zeigt ein ungebogenes Croissant 1 als Ausführungsbeispiel eines gewickelten Teigprodukts in Draufsicht. Das Croissant 1 wird aus einem dreieckförmigen oder trapezförmigen Teigstück mit zumindest einer abgestumpfen Spitze gewickelt, wobei das Croissant von der Basis des dreieckförmigen Teigstücks her beginnend gewickelt wird und das stumpfe Ende einen außenliegenden Schluss 2 bildet, der mittig zwischen den Schenkeln und/oder Spitzenden 3 des Croissants angeordnet ist.

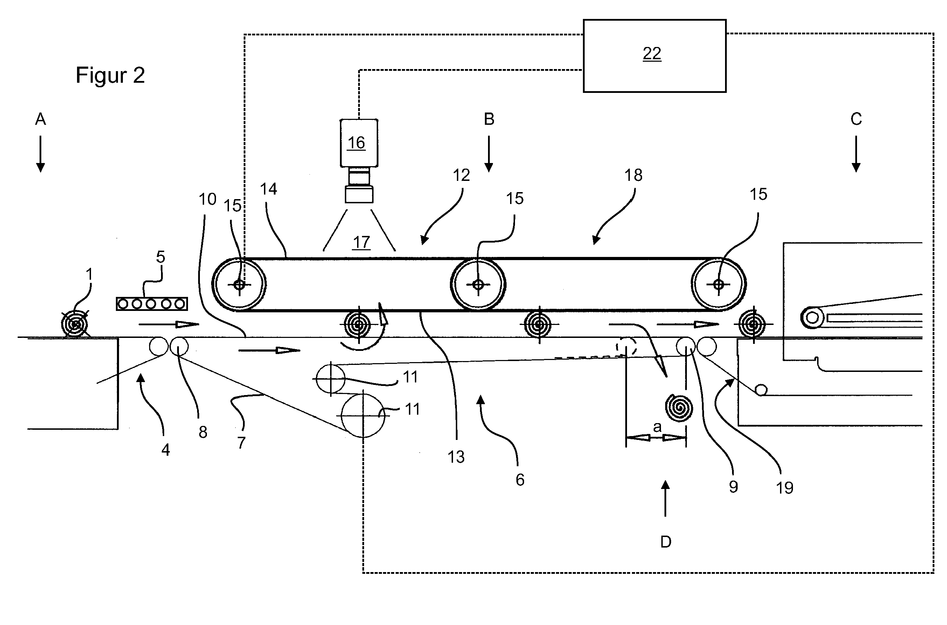

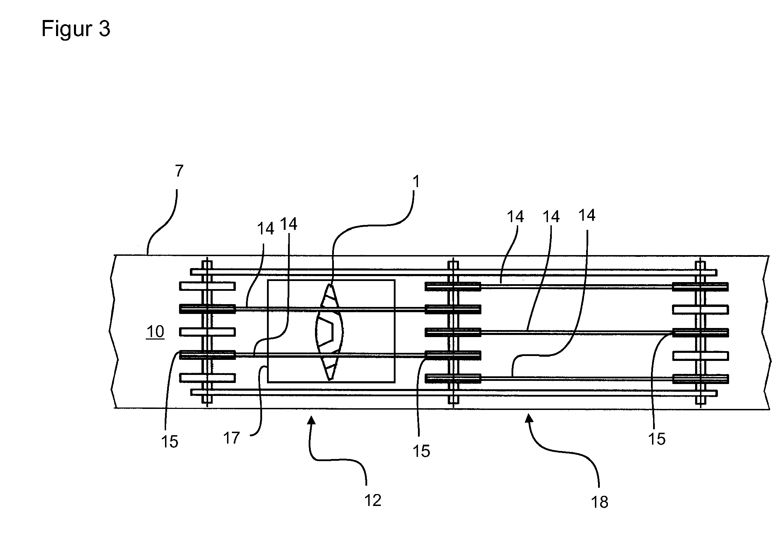

Figur 2 und 3 zeigen in Seitenansicht bzw. ausschnittsweise in Draufsicht ein Ausführungsbeispiel einer Vorrichtung zum schlusslagengenauen Ausrichten von gewickelten Teigprodukten. Wie am besten in Figur 2 zu sehen ist, kann die Vorrichtung grob in vier Funktionsgruppen unterteilt werden. Die erste Funktionsgruppe wird durch ein Wickelsystem A gebildet, welches ein dreieckförmiges Teigstück zu einem ungebogenen Croissant 1 aufwickelt. Das Croissant 1 wird nachfolgend in dem Ausrichtsystem B schlusslagengenau ausgerichtet und anschließend entweder einem Biegesystem C übergeben oder durch ein Ausschleusungssystem D als Ausschuss ausgesondert. Dieses kann gemäß Fig.2 dadurch realisiert sein, dass die hintere Umlenkrolle 9 in Förderrichtung zum Hin- und Herbewegen von der Steuerungseinrichtung abhängig von dessen Auswertungsergebnis ansteuerbar ist.

Das Wickelsystem A ist aus dem Stand der Technik bekannt. Zur Übergabe an das Ausrichtsystem B umfasst das Wickelsystem A eine Übergabeeinrichtung 4, die als Förderband ausgebildet ist. Optional kann die Übergabeeinrichtung 4 zusätzlich eine Matte 5 umfassen, unter der das Croissant 1 fertiggewickelt wird und/oder grob ausgerichtet wird.

Das Ausrichtsystem B weist einen Transporttisch 6 auf, auf den das Croissant 1 von der Übergabeeinrichtung 4 übergeben wird. Der Transporttisch 6 besteht im wesentlichen aus einem Transportband 7, welches über eine in Förderrichtung vordere Umlenkrolle 8 und eine hintere Umlenkrolle 9 derart aufgespannt ist, dass eine erste Transportbahn 10 gebildet wird. Die Transportbahn 10 ist waagrecht ausgerichtet und transportiert das Croissant in der Darstellung in Figur 2 von links nach rechts. Unterhalb der Transportbahn 10 sind Antriebs- und Umlenkrollen 11 angeordnet, so dass das Transportband 7 aktiv mit Motorkraft angetrieben werden kann.

Oberhalb des Transporttisches 6 ist ein erstes Riemensystem 12 angeordnet, das eine zweite Transportbahn 13 bildet, die, bzw. deren Transportfläche, parallel und gegenüberliegend zu der ersten Transportbahn 10, bzw. zu deren Transportfläche, ausgerichtet ist. Wie am besten aus der Draufsicht in Figur 3 zu erkennen ist, weist das Riemensystem 12 zwei parallel angeordnete, aber voneinander beabstandete Teigstück-Führungsriemen 14 auf, die über Riemenumlenk- bzw. Riemenantriebsrollen 15 geführt und mit Motorkraft angetrieben sind. Die erste und die zweite Transportbahn 10 bzw. 13 bilden einen Transportzwischenraum, dessen Höhe geringer als die Höhe des Croissants 1 ausgebildet ist, so dass das Croissant 1 in dem Transportzwischenraum von beiden Transportbahnen 10 und 13 kontaktierend gehalten und geführt wird.

Oberhalb des Riemensystems 12 ist eine Videokamera und/oder eine digitale Kamera - nachfolgend Kamera 16 genannt - angeordnet, deren Beobachtungsbereich einen Abschnitt des Transportzwischenraums erfasst. Ein beispielhafter Beobachtungsbereich 17 von ca. 100 mm Länge in Förderrichtung ist in der Figur 3 durch ein Rechteck illustriert. Wie aus der Figur 3 zu erkennen ist, erfasst die Kamera 16 den Beobachtungsbereich durch den Zwischenraum der voneinander beabstandeten Teigstück-Führungsriemen 14 hindurch und nimmt das Croissant 1 in Draufsicht auf.

Bei dem Transporttisch 6 ist die hintere Umlenkrolle 9 des Transportbandes 7 verschiebbar angeordnet und zwar derart, dass durch eine Verschiebung der hinteren Umlenkrolle 7 die Transportbahn 10 um einen Abstand a verkürzt werden kann und somit ein Auswurf für Ausschussprodukte gebildet wird. Alternativ kann als Mittel zum Auswurf auch eine Auswurfklappe oder ähnliches vorgesehen sein.

Dem ersten Riemensystem 12 ist ein zweites Riemensystem 18 nachgeschaltet. Das zweite Riemensystem 18 ist wie das erste Riemensystem 12 aufgebaut, mit dem Unterschied, dass drei Teigstück-Führungsriemen 14 vorgesehen sind. Ein Teigstück-Führungsriemen 14 ist mittig und die zwei weiteren Teigstück-Führungsriemen 14 sind mit einem größeren Abstand voneinander beabstandet als die Teigstück-Führungsriemen 14 des ersten Riemensystems 12 ausgebildet und umgreifen diese. Das erste Riemensystem 12 und das zweite Riemensystem 18 nutzen für die in Förderrichtung hintere bzw. vordere Riemenumlenkrolle 15 die gleiche Achse und greifen somit derart ineinander bzw. überlappen derart, dass die zweite Transportbahn 13 des ersten Riemensystems 12 durch das zweite Riemensystem 18 verlängert und das schlusslagengenau ausgerichtete Croissant 1 zu dem Biegesystem C transportiert wird ohne dass der oberseitige Kontakt unterbrochen wird. Zur Ansteuerung der Vorschubgeschwindigkeiten der Transportbahnen 10 und 13 sowie zur Auswertung der Bilder der Kamera 16 ist eine Auswertungs- und Steuerungseinrichtung 22 vorgesehen.

Das Biegesystem C ist aus dem Stand der Technik bekannt und umfasst eine weitere Übergabeeinrichtung 19, die als Förderband ausgebildet ist, auf die das schlusslagengenau ausgerichtete Croissant 1 abgelegt wird.

Die Funktions- beziehungsweise Verfahrensweise kann wie folgt betrieben werden: Zunächst wird in dem Wickelsystem A aus einem dreieckigen oder trapezförmigen Teigband mit abgestumpfter Spitze ein ungebogenes Croissant 1 gewickelt, wie es in Figur 1 dargestellt ist. Gegebenenfalls wird durch die optionale Matte 5 im Bereich der Übergabeeinrichtung 4 das Croissant 1 fertiggewickelt und grob ausgerichtet. Das Croissant 1 verlässt das Wickelsystem A und wird dem Ausrichtsystem B in einem unausgerichteten oder nur grob ausgerichteten Zustand bezüglich der Lage des Teigschlusses 2 übergeben.

Im Ausrichtsystem B wird das Croissant 1 durch die erste und zweite Transportbahn 10 und 13 gemeinsam aufgenommen. Solange sich das Croissant 1 in Förderrichtung betrachtet im vorderen Bereich oder Eingangsabschnitt des ersten Riemensystems 12 befindet, werden die erste und die zweite Transportbahn 10 und 13 auf Gleichlauf geschaltet, d.h. die Teigstück-Führungsriemen 14 werden mit der gleichen Geschwindigkeit und gleichsinnig wie das darunter liegende Transportband 7 betrieben. Die Vorschubgeschwindigkeit beträgt beispielsweise 12 - 15 m/min.

Diese Vorschubgeschwindigkeit wird beibehalten, bis das Croissant 1 in den Beobachtungsbereich 17 der Kamera 16 eintritt. Bei Erkennung des Eintritts beispielsweise mittels digitaler Bildverarbeitung oder einer Lichtschranke o.ä. wird der Antrieb für die Teigstück-Führungsrollen 14 des ersten Riemensystems 12 derart angesteuert, dass die Vorschubgeschwindigkeit der zweiten Transportbahn 13alternativ auf 0 m/min gesetzt wird, also langsamer als die Vorschubgeschwindigkeit der ersten oder unteren Transportbahn 10 gesetzt wird oder mit entgegengesetzter Vorschubgeschwindigkeit betrieben wird. Anders ausgedrückt drehen sich die Teigstück-Führungsriemen 14 des ersten Riemensystems 12 relativ zu dem Transportband 7 und es entsteht eine Relativbewegung zwischen erster und zweiter Transportbahn 10 und 13. Durch die Ansteuerung der Transportbahnen 10 und 13 mit zueinander unterschiedlichen Vorschubgeschwindigkeiten wird das Croissant 1 in eine Rotation um seine quer zur Förderrichtung angeordnete Längsachse versetzt, da das Croissant 1 an der stehenden, langsamer laufenden oder entgegen laufenden zweiten Transportbahn 13 abrollt.

Sobald mittels der Kamera 16 und Auswertung über digitale Bildverarbeitung eine korrekte Schlusslage oder deren Herbeiführung erkannt werden, werden die Transportbahnen 10 und 13 wieder auf Gleichlauf geschaltet und somit die Rotation des Croissants 1 beendet.

Nachdem das Croissant 1 schlusslagengenau ausgerichtet ist, wird es von dem zweiten Riemensystem 18 übernommen, welches konstant mit der gleichen Vorschubgeschwindigkeit wie das Transportband 7 betrieben wird. Das zweite Riemensystem 18 stabilisiert das Croissant 1 in der Lage und führt es in das nachfolgende Biegesystem C. Vorzugsweise greift das zweite Riemensystem 18 sowohl in das erste Riemensystem 12 als auch in das Biegesystem C derart ein, dass eine Verdrehung des Croissants 1 um die Längsachse ausgeschlossen ist.

Sollte über die Auswertung der Bilder der Kamera 16 ermittelt werden, dass der Croissant 1 nicht den Qualitätsanforderungen genügt oder nicht ausgerichtet werden konnte, wird ein derart minderwertiges Croissant 1 über die Mittel zum Auswurf, nämlich das Ausschleusungssystem D, automatisiert ausgesondert.

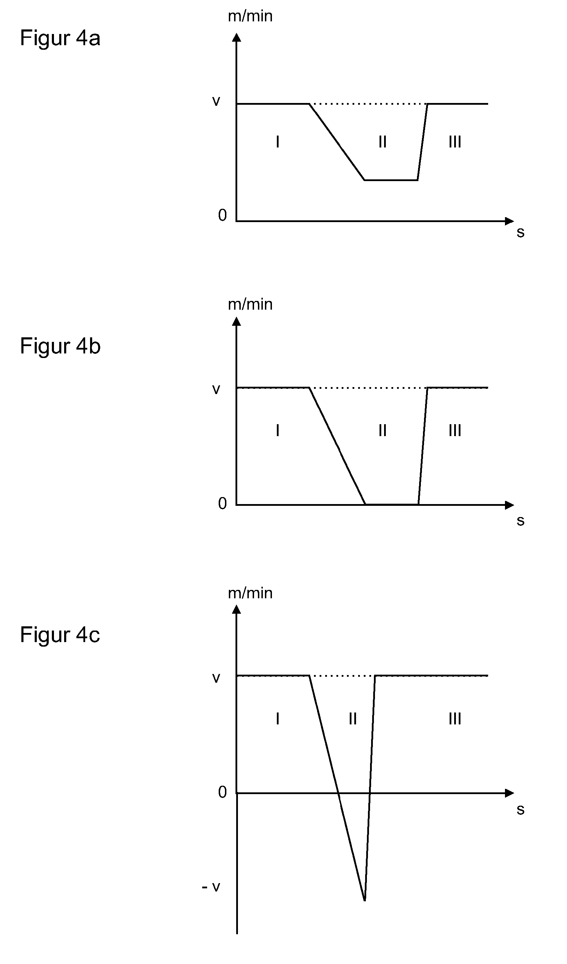

Die Figuren 4a, b, c illustrieren drei verschiedene Ausführungsformen für das Verfahren zur schlusslagengenauen Ausrichtung insbesondere unter Verwendung der Vorrichtung in den Figuren 2 und 3. Es ist jeweils ein nicht maßstabgetreues Vorschubgeschwindigkeiten - Weg - Diagramm gezeigt, wobei die Vorschubgeschwindigkeit einer ersten Transportbahn 10 mit einer gestrichelten Linie dargestellt ist und bei allen drei Diagrammen den konstanten Wert v annimmt. Die Vorschubgeschwindigkeit der zweiten Transportbahn 13 ist mit einer durchgezogenen Linie gezeigt. Auf der waagrechten Achse ist die Position des Croissants 1 innerhalb der Ausrichtvorrichtung B aufgetragen. Der Koordinatenursprung entspricht dabei der Position des Einfahrens in die Ausrichtvorrichtung, das Kurvenende entspricht dem Ende des ersten Riemensystems 12.

Bei der ersten Ausführungsform in der Figur 4a fährt das Croissant 1 in das Ausrichtsystem B ein, während die Transportbahnen 10,13 auf Gleichlauf geschaltet sind, also die gleiche Vorschubgeschwindigkeit v einnehmen. Dieser Bereich ist in der Figur 4a mit I bezeichnet. Sobald die Kamera 16 oder ein anderes Sensorsystem das Croissant 1 detektiert hat, wird die Vorschubgeschwindigkeit der zweiten Transportbahn 13 reduziert, so dass sich eine Relativgeschwindigkeit zwischen erster und zweiter Transportbahn entwickelt und das Croissant 1 rotiert. Der Bereich der Rotation ist mit II bezeichnet. Während der Rotation des Croissants 1 wird durch die Kamera 16 ständig die Schlusslage des Croissants 1 überprüft. Sobald die Schlusslage an der SOLL-Position ist, vorzugsweise erstmalig an der SOLL-Position ist, und die richtige Position erkannt wurde, werden die Transportbahnen 10 und 13 wieder auf Gleichlauf gesetzt und dadurch die Rotation gestoppt, wie es in dem Bereich III dargestellt ist. Das Croissant 1 ist nun ausgerichtet und wird an das zweite Riemensystem 18 übergeben. Der eigentliche Ausrichtvorgang, d.h. der Bereich II dauert vorzugsweise 0,4 s.

Das Ausführungsbeispiel in Figur 4b unterscheidet sich von der Figur 4a nur darin, dass die Vorschubgeschwindigkeit im Bereich II auf 0 m/min gesetzt wird. Die resultierende Fördergeschwindigkeit des Croissants 1 ist im Bereich II gegenüber dem Bereich I um die Hälfte verringert.

Das Ausführungsbeispiel in der Figur 4c zeigt einen weiteren Sonderfall, wobei die Vorschubgeschwindigkeit der zweiten Transportbahn 13 betragsmäßig gleich der der ersten Transportbahn 10, jedoch deren Vorschubgeschwindigkeit entgegengerichtet ist. In diesem Fall rotiert das Croissant 1 im Bereich II auf der Stelle.

Es sollte offensichtlich sein, dass das Verfahren auch ausgeführt werden kann, wenn das Croissant 1 bereits im Anfangs-Bereich I rotiert wird, oder wenn im Bereich II die Vorschubgeschwindigkeit der zweiten Transportbahn 13 größer als die Vorschubgeschwindigkeit gewählt wird oder wenn die Vorschubgeschwindigkeit der ersten Transportbahn 10 ergänzend oder alternativ variiert wird.

In der Figur 1 sind zur Illustration der Auswertung der Bilder der Kamera 16 mittels digitaler Bildverarbeitung zusätzlich Fenster 20 sowie eine mittlere Querachse 21 dargestellt. Die Bildverarbeitung wird bei dem Verfahren zur Detektion der Schlusslage und optional ergänzend zur Qualitätsüberwachung eingesetzt. Zum einen ist es möglich, ein Bild des Croissants 1 mit einem abgespeicherten Referenzbild zu vergleichen und anhand der Unterschiede und ebenfalls abgespeicherter Grenzwerte eine Bewertung durchzuführen. Alternativ oder ergänzend wird eine Merkmalsextraktion durchgeführt und beispielsweise mittels Kantendetektion oder Schattendetektion der Schluss 2 und die zwei Spitzenden 3 detektiert, was mit den Fenstern 20 in Figur 1 dargestellt ist. Ein weiteres Qualitätsmerkmal ist z.B. die Symmetrie des ungebogenen Croissants 1 relativ zu einer mittleren Querachse 21.

### Bezugszeichenliste

- 1: Croissant
- 2: Schluss
- 3: Spitzenden
- 4: Übergabeeinrichtung
- 5: Matte
- 6: Transporttisch
- 7: Transportband
- 8: vordere Umlenkrolle
- 9: hintere Umlenkrolle
- 10: erste Transportbahn
- 11: Antriebs- und Umlenkrollen
- 12: erstes Riemensystem
- 13: zweite Transportbahn
- 14: Teigstück-Führungsriemen
- 15: Riemenumlenk- bzw. Riemenantriebsrollen
- 16: Kamera
- 17: Beobachtungsbereich
- 18: zweites Riemensystem
- 19: weitere Übergabeeinrichtung
- 20: Fenster
- 21: mittlere Querachse
- 22: Auswertungs- und Steuerungseinrichtung
- a: Abstand
- s: Weg
- v: Vorschubgeschwindigkeit
- A: Wickelsystem
- B: Ausrichtsystem
- C: Biegesystem
- D: Ausschleusungssystem

## Patentansprüche

1. Verfahren zum schlusslagengenauen Ausrichten von gewickelten Teigprodukten (1), wobei das Teigprodukt (1) zwischen einer Transporteinrichtung (10) und einer Stelleinrichtung entlang einer Transportstrecke geführt wird, und wobei eine Abweichung der Schlusslage von einer SOLL-Schlusslage gemessen wird, **dadurch gekennzeichnet, dass** eine mit Teigschubmitteln versehene Stelleinrichtung verwendet wird, und die Stelleinrichtung (13) mit ihren Teigschubmitteln und/oder die Transporteinrichtung (10) abhängig von der SOLL-Schlusslagenmessung derart angesteuert werden, dass das Teigprodukt (1) mit zueinander unterschiedlichen Vorschubgeschwindigkeiten der Transport- und Stelleinrichtungen um seine Längsachse gedreht und in die SOLL-Schlusslage überführt wird.

2. Verfahren nach Anspruch 1, **dadurch gekennzeichnet, dass** mit der Transporteinrichtung und mit der mit Teigschubmitteln versehenen Stelleinrichtung gegenüberliegende und parallel oder im wesentlichen parallel zueinander verlaufende, erste und zweite Teigprodukt-Transportbahnen (10,13) gebildet werden, welche gemeinsam die Transportstrecke ergeben.

3. Verfahren nach Anspruch 1 oder 2, **dadurch gekennzeichnet, dass** die Messung der Abweichung erfolgt, während das Teigprodukt (1) innerhalb der Transportstrecke angeordnet ist.

4. Verfahren nach Anspruch 3, **dadurch gekennzeichnet, dass** das Teigprodukt (1) während der Messung der Abweichung stationär um seine Längsachse rotiert.

5. Verfahren nach Anspruch 3, **dadurch gekennzeichnet, dass** das Teigprodukt (1) während der Messung der Abweichung entlang der Transportstrecke verfahren wird und gleichzeitig um seine Längsachse rotiert.

6. Verfahren nach Anspruch 5, **dadurch gekennzeichnet, dass** die Messung der Abweichung durch eine Sensorvorrichtung (16) erfolgt, die während der Messung parallel zu dem Teigprodukt (1) entlang der Transportstrecke gleichlaufend mitbewegt wird.

7. Verfahren nach Anspruch 2 oder Anspruch 2 und einem der sonst vorhergehenden Ansprüche, **dadurch gekennzeichnet, dass** das Teigprodukt (1) um seine Längsachse gedreht wird, bis sich das Teigprodukt in der SOLL-Schlusslage befindet und dann die beiden Transportbahnen (10, 13) auf Gleichlauf geschaltet werden.

8. Verfahren nach einem der vorhergehenden Ansprüche, **dadurch gekennzeichnet, dass** das ausgerichtete Teigprodukt bis zum nächsten Bearbeitungsschritt, insbesondere bis zur Biegung des Teigprodukts (1), in der ausgerichteten Lage aktiv stabilisiert wird.

9. Verfahren nach einem der vorhergehenden Ansprüche, **dadurch gekennzeichnet, dass** zur Messung der Abweichung und/oder zur Qualitätsbewertung des Teigprodukts (1) ein oder mehrere vorzugsweise digitale Bilder des Teigprodukts (1) aufgenommen werden und diese Bilder mittels digitaler Bildverarbeitung ausgewertet werden, insbesondere mit gespeicherten Referenzbildern verglichen werden.

10. Verfahren nach einem der vorhergehenden Ansprüche, **dadurch gekennzeichnet, dass** minderwertige Teigprodukte automatisch ausgesondert werden.

11. Verfahren nach einem der vorangehenden Ansprüche, **dadurch gekennzeichnet, dass** eine Relativlage des Schlusses (2) des Teigprodukts (1) bezüglich seiner Längserstreckung gemessen und anhand des Messergebnisses gegebenenfalls eine Minderwertigkeit des Teigprodukts (1) ermittelt und/oder eine Qualitätsprüfung durchgeführt werden.

12. Verfahren nach einem der vorangehenden Ansprüche, **dadurch gekennzeichnet, dass** die Relativlage des Teigprodukts (1) bezüglich der Transporteinrichtung gemessen, und abhängig vom Messergebnis die Stelleinrichtung zu einer Verstellung des Teigprodukts (1) in einer Richtung quer zur Transportrichtung betätigt wird.

13. Vorrichtung zum schlusslagengenauen Ausrichten von gewickelten Teigprodukten (1), insbesondere zur Durchführung des Verfahrens nach einem der vorhergehenden Ansprüche, mit einer Transporteinrichtung zum Vorschub des Teigprodukts (1) entlang einer Transportstrecke, mit einer der Transporteinrichtung gegenüber liegenden Stelleinrichtung, um gemeinsam mit der Transporteinrichtung das Teigprodukt in Drehung um seine Längsachse zu versetzen, mit einer Sensorvorrichtung (16) zur Messung der Abweichung der Schlusslage von einer SOLL-Schlusslage, und mit einer Steuereinrichtung (22) zur Ansteuerung wenigstens der Stelleinrichtung abhängig von der Messung zwecks Drehung des Teigstücks um seine Längsachse in eine SOLL-Schlusslage **dadurch gekennzeichnet, dass** die Stelleinrichtung mit Teigschubmitteln versehen ist, um dem Teigprodukt (1) eine Schubkomponente in oder entgegen den der Förderrichtung zu erteilen, und die Steuereinrichtung (22) schaltungstechnisch und/oder programmtechnisch derart ausgebildet ist, dass auf Basis der gemessenen Abweichung der Schlusslage von der SOLL-Schlusslage die Transporteinrichtung (10) und die mit Teigschubmitteln versehene Stelleinrichtung mit zueinander unterschiedlichen Vorschubgeschwindigkeiten angesteuert werden und/oder ansteuerbar sind, um das Teigprodukt in die SOLL-Schlusslage zu drehen.

14. Vorrichtung nach Anspruch 13, **dadurch gekennzeichnet, dass** die Transporteinrichtung und die Stelleinrichtung zur Bildung von ersten und zweiten Transportbahnen (10,13) angeordnet und ausgebildet sind, wobei die Transportbahnen (10, 13) gegenüberliegend und parallel oder im wesentlichen parallel zueinander angeordnet und derart beabstandet sind, dass zwischen den Transportbahnen (10, 13) das Teigprodukt (1) gemeinsam führbar ist.

15. Vorrichtung nach Anspruch 14, **dadurch gekennzeichnet, dass** die erste Transportbahn (10) durch ein Transportband (7) gebildet ist, und/oder die zweite Transportbahn (13) durch ein erstes Riemensystem (18), vorzugsweise mit zwei voneinander beabstandeten Teigstück-Führungsriemen (14), gebildet ist.

16. Vorrichtung nach Anspruch 13, 14 oder 15, **gekennzeichnet durch** ein Wickelsystem (A) zum Wickeln von Teigstücken in gewickelte Teigprodukte (1), welches der Transport- und Stelleinrichtung vorzugsweise unmittelbar vorgeschaltet ist, und/oder eine Biegemaschine (C) zum Biegen der gewickelten Teigprodukte (1) in eine gekrümmte Form, welches der Transport- und Stelleinrichtung vorzugsweise unmittelbar nachgeschaltet ist.

17. Vorrichtung nach Anspruch 15 oder 15 und 16, **dadurch gekennzeichnet, dass** dem ersten Riemensystem (12) ein zweites Riemensystem (18) zum Überführen des Teigprodukts vorzugsweise in die Biegemaschine unmittelbar und/oder bereichsweise überlappend und/oder ineinandergreifend nachgeordnet ist.

18. Vorrichtung nach einem der Ansprüche 13 bis 17, **dadurch gekennzeichnet, dass** im Bereich des Endabschnitts der ersten Transporteinrichtung (10) wenigstens ein Mittel (D) zum Auswurf von Ausschussteigprodukten minderer Qualität vorgesehen ist.

19. Vorrichtung nach Anspruch 18, **dadurch gekennzeichnet, dass** die Mittel zum Auswurf als eine Verschiebeeinrichtung der in Förderrichtung hinteren Umlenkrolle des Transportbandes (7) ausgebildet sind.

20. Vorrichtung nach einem der Ansprüche 13 bis 19, **dadurch gekennzeichnet, dass** der Beobachtungsbereich (17) der Sensorvorrichtung (16) sich im Bereich der Transportstrecke erstreckt.

21. Vorrichtung nach einem der Ansprüche 13 bis 20, **dadurch gekennzeichnet, dass** die Sensorvorrichtung (16) auf der Seite der als erstes Riemensystem (12) ausgebildeten Stelleinrichtung (13) angeordnet ist und vorzugsweise ein Teil des Beobachtungsbereich (17) der Sensorvorrichtung (16) zwischen den Teigstück-Führungsriemen (14) verläuft.

22. Vorrichtung nach einem der Ansprüche 13 bis 21, **dadurch gekennzeichnet, dass** die Sensorvorrichtung eine Kamera (16), vorzugsweise digitale Kamera, insbesondere als CCD- oder CMOS-Kamera, umfasst.

23. Vorrichtung nach Anspruch 22, **dadurch gekennzeichnet, dass** eine Auswertungsvorrichtung (22) vorgesehen ist, die programmtechnisch und/oder schaltungstechnisch derart ausgebildet ist, Bilder der Kamera (16) mit Algorithmen der Bildverarbeitung weiterzubearbeiten.

24. Vorrichtung nach Anspruch 23, **dadurch gekennzeichnet, dass** die Auswertungseinrichtung (22) zur Bestimmung der Relativlage des Schlusses (2) des Teigprodukts (1) bezüglich seiner Längserstreckung aus den Kamerasignalen eingerichtet ist.

25. Vorrichtung nach Anspruch 23 oder 24, **dadurch gekennzeichnet, dass** die Auswertungseinrichtung (22) zur Bestimmung der Relativlage des Teigprodukts (1) bezüglich eines mittleren Längsbereichs eines Transportbandes (7) aus den Kamerasignalen eingerichtet ist.

26. Vorrichtung nach Anspruch 18 und einem der Ansprüche 23 bis 25, **dadurch gekennzeichnet, dass** die Auswertungseinrichtung (22) ausgangsseitig mit dem oder den Mitteln (D) zum Auswurf von Ausschussteigprodukten minderer Qualität gekoppelt ist.

27. Vorrichtung nach einem der Ansprüche 23 bis 26, **dadurch gekennzeichnet, dass** die Stelleinrichtung Teigstück-Querschubmittel umfasst, die zum Verstellen und/oder Ausrichten des Teigprodukts (1) quer zu einer Transport- oder Förderrichtung ausgebildet sind, wobei die Querschubmittel von der Auswertungseinrichtung (16) ansteuer- und/oder regelbar sind.

28. Vorrichtung nach einem der Ansprüche 13 bis 27, **dadurch gekennzeichnet dass** die Sensorvorrichtung (16) stationär oder mit dem Teigprodukt (16) gleichlaufend entlang der Transportstrecke automatisch verfahrbar angeordnet ist.
